# EUROPÄISCHE PATENTANMELDUNG

(11) **EP 2 937 181 A1**
(43) Veröffentlichungstag der Anmeldung: **28.10.2015**
(21) Anmeldenummer: 14165392.3
(22) Anmeldetag: 22.04.2014
(51) Int. Cl.: B25B 23/00

(54) **Werkzeughalter**

(71) Anmelder: HILTI Aktiengesellschaft, 9494 Schaan (LI)
(72) Erfinder: Hölz, Kevin, 72532 Gomadingen (DE)
(74) Vertreter: Hilti Aktiengesellschaft Corporate Intellectual Property

(57) **Zusammenfassung**

Der erfindungsgemäße Werkzeughalter **2** hat einen rohrförmigen Grundkörper **17,** einen Verriegelungskörper **6,** der in einem ersten Durchstich **37** des Grundkörpers liegt, und eine zwischen eine Entnahmestellung und einer Verriegelungsstellung verschiebbare Betätigungshülse **7.** Der Grundkörper **17** hat eine Vertiefung **32** in der Außenseite **22** und einen von der Vertiefung **32** ausgehenden bis in den Aufnahmeraum **19** reichenden zweiten radialen Durchstich **37.** Die Betätigungshülse **7** hat ein radial vorgespanntes Rastelement, das in der Entnahmestellung in die Vertiefung **32** eingreift. In dem zweiten radialen Durchstich ist ein Auswurfkörper geführt, der in der Entnahmestellung von dem Rastelement in eine teilweise in den Aufnahmeraum **19** ragende Stellung geschoben ist und in einer aus dem Aufnahmeraum **19** ausgerückten Stellung das Rastelement aus der Vertiefung verdrängt.

## Beschreibung

### GEBIET DER ERFINDUNG

Die vorliegende Erfindung betrifft einen Werkzeughalter, insbesondere für einen Elektroschrauber mit einer selbstverriegelnden Werkzeughalterung, welche durch Verschieben einer Hülse entgegen einer Einführrichtung des Werkzeugs entriegelbar ist.

US 6,695,321 offenbart einen Werkzeughalter für ein Schrauberbit. Die Verriegelung des Werkzeugs erfolgt manuell. Eine in den Aufnahmeraum teilweise ragende Kugel ist in einer Grundstellung durch eine Betätigungshülse in radialer Richtung gehemmt. Der Anwender kann die Betätigungshülse längs einer Achse verschieben und die Hemmung aufheben. Beim Einsetzen des Schrauberbits weicht die Kugel radial aus. Eine Feder verschiebt die Betätigungshülse in die Grundstellung.

US 7,469,909 offenbart einen Werkzeughalter, der selbsttätig ein Schrauberbit verriegelt. Der Anwender steckt ein Schrauberbit in Einführrichtung in einen Aufnahmeraum des Werkzeughalters. Eine Verriegelungskugel liegt in einem Langloch und ragt teilweise in den Aufnahmeraum. Das Schrauberbit verschiebt die Kugel in dem Langloch. Die Verriegelungskugel ist anfänglich in radialer Richtung durch eine Innenfläche einer Betätigungshülse gehemmt. Die Innenfläche weitet sich konisch in Einführrichtung auf, so dass die Verrieglungskugel nahe des maschinenseitigen Endes des Langlochs radial aus dem Aufnahmeraum austreten kann. Die Kugel fällt in den Aufnahmeraum zurück, wenn die Verriegelungsnut des Schrauberbits das Ende des Langlochs erreicht. Eine Feder schiebt die Verriegelungskugel zu dem werkzeugseitigen Ende des Langlochs und dem verjüngten Ende der Innenfläche der Betätigungshülse. Das Langloch ermöglicht das Werkzeug einzusetzen, ohne die Betätigungshülse verschieben zu müssen. Zum Entriegeln verschiebt der Anwender die Betätigungshülse entgegen der Einführrichtung und zieht das Schrauberbit heraus. Die Verriegelungskugel weicht in radialer Richtung aus.

### OFFENBARUNG DER ERFINDUNG

Der erfindungsgemäße Werkzeughalter hat einen rohrförmigen Grundkörper, Verriegelungskörper und eine Betätigungshülse. Der rohrförmige Grundkörper, weist einen zu einer Arbeitsachse koaxialen prismatischen Aufnahmeraum zum Aufnehmen eines Werkzeugs und einen ersten radialen Durchstich auf. Der Verriegelungskörper ist in dem ersten radialen Durchstich in radialer Richtung zwischen einer teilweise in den Aufnahmeraum ragenden und einer aus dem Aufnahmeraum ausgerückten Stellung beweglich geführt. Die Betätigungshülse ist auf dem Grundkörper längs der Arbeitsachse zwischen einer Verriegelungsstellung zum Verriegeln des Werkzeugs in dem Aufnahmeraum und einer Entnahmestellung zum Entnehmen des Werkzeugs aus dem Aufnahmeraum beweglich. Die Betätigungshülse hat eine Sperrfläche und eine Tasche. In der Verriegelungsstellung überlappt die Sperrfläche mit dem ersten radialen Durchstich und der Verriegelungskörper ist durch die Sperrfläche in der in den Aufnahmeraum ragenden Stellung gehemmt. In der Entnahmestellung überlappt die Tasche mit dem ersten radialen Durchstich und der Verriegelungskörper ist in die aus dem Aufnahmeraum ausgerückten Stellung beweglich ist, indem der Verriegelungskörper teilweise in die Tasche eintaucht. Eine Feder spannt die Betätigungshülse in Richtung von der Entnahmestellung in die Verriegelungsstellung vor.

Der Grundkörper hat eine Vertiefung in der Außenseite und einen von der Vertiefung ausgehenden bis in den Aufnahmeraum reichenden zweiten radialen Durchstich. Die Betätigungshülse hat ein radial vorgespanntes Rastelement, das in der Entnahmestellung in die Vertiefung eingreift. In dem zweiten radialen Durchstich ist ein Auswurfkörper geführt, der in der Entnahmestellung von dem Rastelement in eine teilweise in den Aufnahmeraum ragende Stellung geschoben ist und in einer aus dem Aufnahmeraum ausgerückten Stellung das Rastelement aus der Vertiefung verdrängt. Die Betätigungshülse bleibt in der Entnahmestellung stehen. Das Einsetzen eines Werkzeugs wird hierdurch erleichtert. Das Werkzeug entriegelt durch Verdrängen des Auswurfkörpers aus dem Aufnahmeraum die Betätigungshülse, welche dann angetrieben durch die Feder automatisch verriegelt.

Der Werkzeughalter benötigt keine zu der Arbeitsachse parallel beweglich geführten Verriegelungskörper, um ein Werkzeug ohne Betätigen der Betätigungshülse einsetzen zu können. Der Werkzeughalter ist entsprechend kürzer. Zudem ist keine Feder notwendig, welche den Verriegelungskörper in einem Langloch in Position halten. Diese Federn erschweren die Montage von Werkzeughaltern.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Elektroschrauber,
- Fig. 2: einen Werkzeughalter in Entnahmestellung
- Fig. 3: einen Querschnitt in der Ebene III-III von Fig. 2
- Fig. 4: den Werkzeughalter in Verriegelungsstellung
- Fig. 5: einen Querschnitt in der Ebene V-V von Fig. 4
- Fig. 6: einen Querschnitt durch einen Werkzeughalter

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

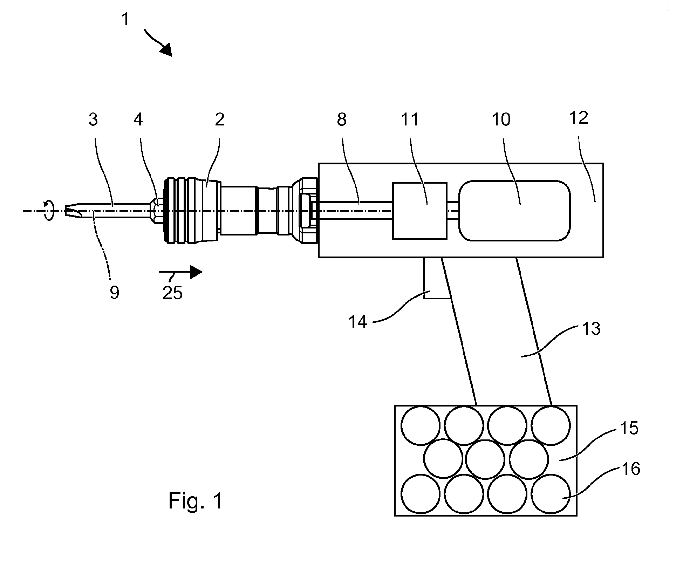

Fig. 1 zeigt schematisch einen Elektroschrauber **1.** Der Elektroschrauber **1** hat einen Werkzeughalter **2,** in welchen Werkzeuge **3** mit einem prismatischen Schaft **4** eingesetzt werden können. Beispielhafte Werkzeuge **3** sind Schraubwerkzeuge, Bohrer und Schleifwerkzeuge. Der prismatische, vorzugsweise sechskantige, Schaft **4** hat Kerben oder eine ringförmige Verriegelungsnut **5,** in welche Verriegelungskörper **6** des Werkzeughalters **2** zum Verriegeln des Werkzeugs **3** eingreifen. Die Verriegelung erfolgt selbsttätig, wenn das Werkzeug **3** eingesetzt wird. Das Entriegeln erfordert ein Verschieben einer Betätigungshülse **7** durch den Anwender. Dabei wird eine Hemmung der Verriegelungskörper **6** aufgehoben und der Anwender kann das Werkzeug **3** aus dem Werkzeughalter **2** herausziehen.

Der Werkzeughalter **2** ist auf eine Spindel **8** aufgesetzt, welche um eine Arbeitsachse **9** drehbar gelagert ist. Die Spindel **8** ist über einen Antriebsstrang mit einem Elektromotor **10** gekoppelt. Der Antriebsstrang kann unter Anderem ein Getriebe **11,** eine einstellbare Drehmomentkupplung und ein Schlagwerk enthalten. Der Motor **10** und der Antriebstrang sind in einem Gehäuse **12** des Elektroschrauber **1** angeordnet. An dem Gehäuse **12** ist ein Handgriff **13** zum Führen des Elektroschraubers **1** und ein Systemtaster **14** zum in Betrieb nehmen des Elektroschraubers **1** vorgesehen. Eine Energieversorgung des Elektromotors **10** erfolgt beispielsweise über ein abnehmbares Batteriepaket **15** aus mehreren sekundären Batteriezellen **16.**

Der Werkzeughalter **2** hat einen rohrförmigen Grundkörper **17.** Der Grundkörper **17** kann als ein Ende der Spindel **8** ausgebildet sein oder beispielsweise mittels eines Linkgewindes an dem Ende der Spindel **8** befestigt sein. Der von den Innenflächen **18** des Grundkörpers **17** definierte Hohlraum bildet einen Aufnahmeraum **19** für das Werkzeug **3.** Der Aufnahmeraum **19** ist prismatisch und koaxial zu der Arbeitsachse **9** angeordnet. Ein Querschnitt des Aufnahmeraums **19** ist vorzugsweise hexagonal. Das Werkzeug **3** kann parallel zu der Arbeitsachse **9** in Einführrichtung **20** in den Aufnahmeraum **19** geschoben werden.

Der beispielhafte Grundkörper **17** ist mit radialen Durchstichen **21** versehen. Beispielsweise können zwei radial gegenüberliegende Durchstiche **21** vorgesehen sein. Der radiale Durchstich **21** ist beispielsweise eine kreisförmige Bohrung, deren Achse senkrecht oder geneigt zu der Arbeitsachse **9** ist. Eine Kugel **6** ist in jeden der Durchstiche **21** eingelegt. Der Durchstich **21** und die Kugel **6** haben vorzugsweise etwa den gleichen Durchmesser. Die Kugel **6** ist längs der Achse des Durchstichs **21** beweglich und senkrecht zu der Achse, z.B. längs der Arbeitsachse **9,** unbeweglich. Die Kugel **6** ragt in dem Durchstich **21** liegend teilweise in den Aufnahmeraum **19** hinein. Die Kugel **6** kann in die Kerben oder die Verriegelungsnut **5** an dem Werkzeugschaft **4** eingreifen. Der Durchstich **21** verjüngt sich in Richtung zu dem Aufnahmeraum **19,** damit die Kugel **6** nicht vollständig in den Aufnahmeraum **19** fallen kann. Die Kugel **6** ist ein Beispiel für einen Verriegelungskörper **6,** bekannte Alternativen sind radial bewegliche Zylinder und Stifte oder aus dem Durchstich **21** schwenkbare Klinken.

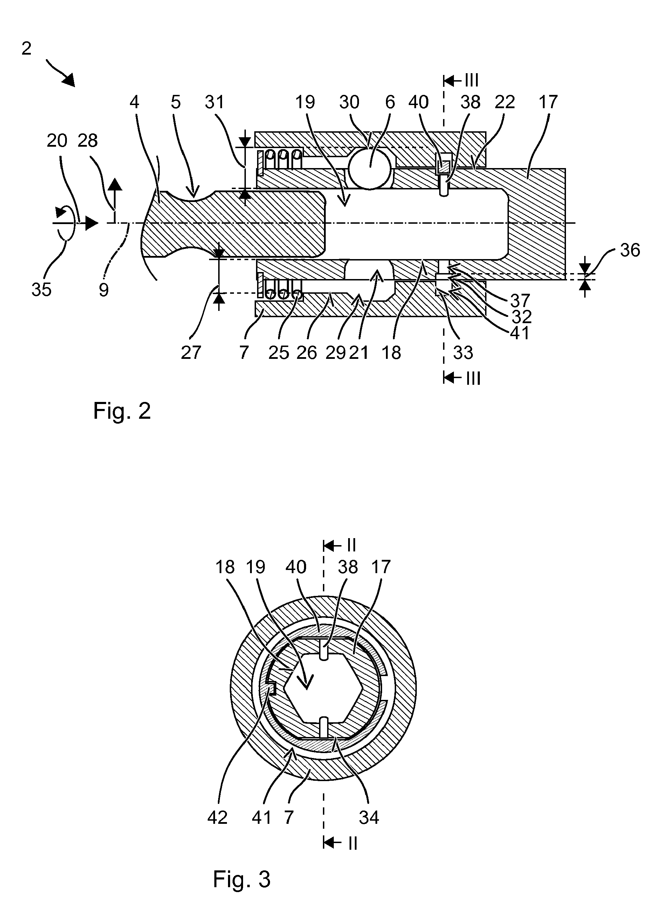

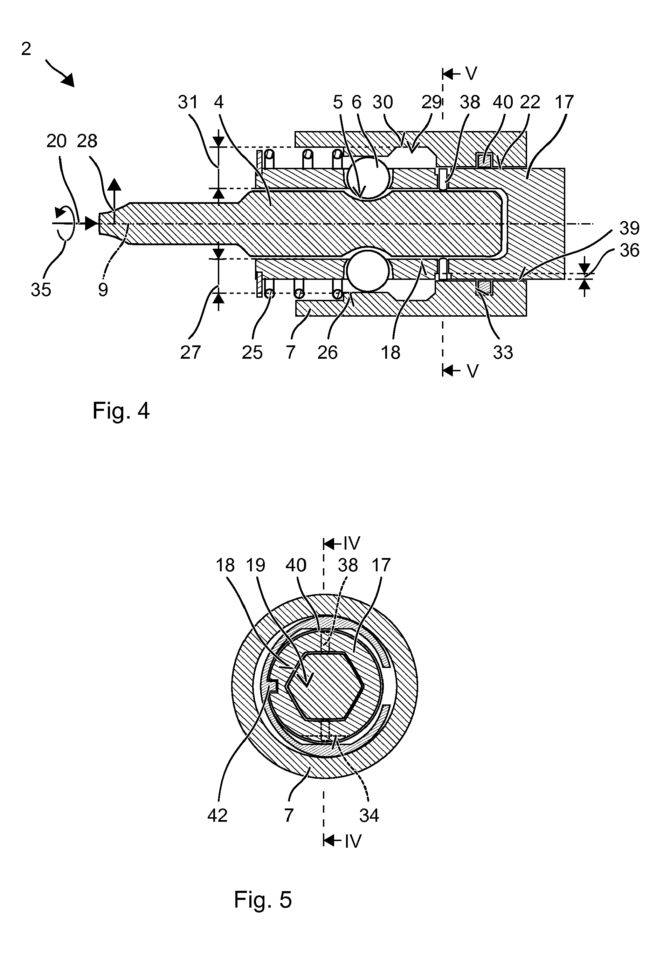

Die Betätigungshülse **7** ist auf den Grundkörper **17** aufgesetzt. Der Grundkörper **17** hat in dem von der Betätigungshülse **7** überdeckten Bereich eine vorzugsweise zylindrische oder prismatische Mantelfläche **22.** Die Betätigungshülse **7** ist auf der Mantelfläche **22** längs der Arbeitsachse **9** zwischen einer Entnahmestellung (Fig. 2) und einer Verriegelungsstellung (Fig.4) beweglich geführt. Die Verriegelungsstellung ist in Einführrichtung **20** zu der Entnahmestellung versetzt, so dass das Werkzeug **3** und die Betätigungshülse **7** beim Einführung und Verriegeln in die gleiche Richtung, d.h. die Einführrichtung **20,** bewegt werden und analog das Werkzeug 3 und die Betätigungshülse **7** beim Entnehmen und Entriegeln in die gleiche, d.h. entgegen der Einführrichtung **20,** bewegt werden.

Die Betätigungshülse **7** ist durch eine Feder **25** in Einführrichtung **20** kraftbeaufschlagt. Die Feder **25** ist vorzugsweise bereits in der Verriegelungsstellung vorgespannt. Der Anwender muss zum Entriegeln die Betätigungshülse **7** aus der Verriegelungsstellung gegen die Feder **25** bis in die Entnahmestellung schieben. Nach dem Einsetzen eines Werkzeugs **3** schiebt die Feder **20** die Betätigungshülse **7** automatisch bis in die Verriegelungsstellung. Die Feder **25** ist beispielsweise eine Schraubenfeder. Die Feder **25** ist in Einführrichtung **20** vor der Betätigungshülse **7** angeordnet und entgegen der Einführrichtung **20** an dem Grundkörper **17** abgestützt.

Die Betätigungshülse **7** hat eine längs der Arbeitsachse **9** profilierte Innenfläche. Ein Abschnitt der Innenfläche bildet eine Sperrfläche **26** für die Kugeln **6.** Die Sperrfläche **26** überlappt mit dem Durchstich **21,** wenn die Betätigungshülse **7** in der Verriegelungsstellung ist. Ein radialer Abstand **27** der Sperrfläche **26** zu dem Aufnahmeraum **19** ist geringer als die Abmessung der Kugel **6** in radialer Richtung **28.** Entsprechend zwingt die Sperrfläche **26** die Kugel **6** teilweise in den Aufnahmeraum **19** zu ragen. Benachbart zu der Sperrfläche **26** bildet die Innenfläche eine Tasche **29** aus. Die Tasche **29** überlappt mit dem Durchstich **21,** wenn die Betätigungshülse **7** in der Entnahmestellung ist. Die radiale Innenfläche **30** der Tasche **29** hat einen radialen Abstand **31** zu dem Aufnahmeraum **19,** welcher größer als die Abmessung der Kugel **6** in radialer Richtung **28** ist. Die Kugel **6** kann in radialer Richtung **28** aus dem Aufnahmeraum **19** in die Tasche **29** ausweichen. Die Verriegelung des Werkzeugs **3** in dem Aufnahmeraum **19** erfolgt durch die in die Kerben oder die Verriegelungsnut **5** eingreifenden Kugeln **6,** welche in radialer Richtung durch die Sperrfläche **26** der Betätigungshülse **7** gehemmt sind. Der Anwender verschiebt die Tasche **29** über die Kugeln **6,** so dass die Kugeln **6** in radialer Richtung **28** aus den Kerben oder der Verriegelungsnut **5** ausweichen können, wenn der Anwender zugleich entgegen der Einführrichtung **20** an dem Werkzeug **3** zieht.

Der Grundkörper **17** ist beispielsweise mit zwei diametral gegenüberliegenden Vertiefungen **32** in der Mantelfläche **22** versehen. Die Vertiefungen **32** sind beispielsweise als Nuten **32** ausgebildet, die senkrecht zu der Arbeitsachse **9** verlaufen. Die Nuten **32** haben jeweils eine entgegen der Einführrichtung **20** weisende Flanke **33.** Die Flanke **33** ist vorzugsweise eben und senkrecht zu der Arbeitsachse **9.** Die Nuten **32** sind vorzugsweise nicht ringförmig um die Arbeitsachse **9** geschlossen, sondern überdecken nur einen Winkelbereich von jeweils weniger als 90 Grad. Ein Nutboden **34** der Nut **32** geht in Umfangsrichtung **35** in die Mantelfläche **22** über. Der Nutboden **34** kann eben sein. Eine Tiefe **36** der Nut **32** liegt beispielsweise im Bereich zwischen 0,5 mm und 3 mm. Bei der beispielhaften Ausführungsform sind die Vertiefungen **32** in Bezug auf die Durchstiche **21** in Einführrichtung **20** versetzt angeordnet, alternativ können die Vertiefungen **32** vor den Durchstichen **21** angeordnet sein.

Der Grundkörper **17** hat einen weiteren radialen Durchstich **37.** Der Durchstich **37** verläuft von dem Nutboden **34** bis in den Aufnahmeraum **19.** Der Durchstich **37** ist mittig zu der Nut **32** angeordnet. Ein Querschnitt des Durchstichs **37** ist vorzugsweise geringer als die Fläche des Nutbodens **34.** Eine Achse des Durchstichs **37** ist senkrecht oder gegenüber der Arbeitsachse **9** geneigt. Ein Auswurfstift **38** ist in den Durchstich **37** eingelegt. Der Auswurfstift **38** hat vorzugsweise den gleichen Durchmesser wie der Durchstich **37.** Der Auswurfstift **38** ist entsprechend längs der Achse, z.B. parallel zur radialen Richtung **28,** beweglich und senkrecht zu der Achse in dem Durchstich **37** gefangen. Die Abmessung des Auswurfstifts **38** in radialer Richtung **28** kann größer als die radiale Abmessung des Durchstichs **37** sein. Der Auswurfstift **38** kann vorzugsweise soweit in den Aufnahmeraum **19** hineinragen, dass der Auswurfstift **38** nicht mehr in die Nut **32** vorsteht. Ferner kann der Auswurfstift **38** durch das Werkzeug **3** vollständig aus dem Aufnahmeraum **19** herausgeschoben werden, wodurch der Auswurfstift **38** dann in die Nut **32** hineinragt. Vorzugsweise ist die Abmessung des Auswurfstifts **38** etwa gleichgroß oder größer als die Summe aus der Tiefe **36** der Nut **32** und Abmessung des Durchstichs **37,** d.h. gleichgroß oder größer als der Abstand der Mantelfläche **22** von dem Aufnahmeraum **19.** Ist der Auswurfstift **38** aus dem Aufnahmeraum **19** verdrängt, steht der Auswurfstift **38** über die Nut **32** hinaus bis zu der radialen Höhe der Mantelfläche **22** vor. Der Auswurfstift **38** ist ein Beispiel für einen Auswurfkörper. Beispielsweise kann anstelle des Auswurfstifts **38** eine Kugel verwendet werden.

Die Betätigungshülse **7** hat an der Innenfläche **39** ein zu der Arbeitsachse **9** hin vorgespanntes Rastelement **40.** Das Rastelement **40** ist beispielsweise ein geschlitzter Federring **40.** Der beispielhafte metallische Federring **40** ist in eine Ringnut **41** in der Innenfläche **39** eingelegt. Beim Verschieben der Betätigungshülse **7** wird der Federring **40** längs der Arbeitsachse **9** mitbewegt. Der Federring **40** kann mit einem Dorn **42** versehen sein, welcher in einer Längsnut in dem Grundkörper **17** geführt ist. Hierdurch ist ein Drehen des Federrings **40** um die Arbeitsachse **9** unterbunden.

Ein axialer Abstand des Federrings **40** zu der Tasche **29** ist gleich dem axialen Abstand des Auswurfstifts **38** zu der Kugel **6,** d.h. respektive dem Abstand zwischen deren zugehörigen Durchstichen **21, 37.** In der Entnahmestellung überlappt der Federring **40** mit der Nut **32.** Der Federring **40** schnappt in die Nut **32** ein. Eine axiale Abmessung (Breite) des Federrings **40** ist vorzugsweise etwa gleich der Breite der Nut **32.** Der Federring **40** ist in der Nut **32** gefangen und gegen ein axiales Verschieben gesperrt. Insbesondere hindert die Flanke **33** der Nut **32** ein Verschieben des Federrings **40** in Einführrichtung **20.** Der Federring **40** bleibt in Eingriff mit der Ringnut **41** der Betätigungshülse **7.** Entsprechend ist die Betätigungshülse **7** durch den Federrings **40** in der Entnahmestellung arretiert. Die Arretierung wird beim Einsetzen eines Werkzeugs 3 aufgehoben. Der Schaft **4** verdrängt den Auswurfstift **38** aus dem Aufnahmeraum **19.** Der Auswurfstift **38** tritt in die Nut **32** ein und spreizt den Federring **40** wenigstens soweit auf, dass die axiale Hemmung durch den Federring **40** aufgehoben ist. Die Feder **20** verschiebt darauf die Betätigungshülse **7** in die Verriegelungsstellung sobald die Kugeln **6** in die Kerben oder Nuten **32** des Schafts eintauchen.

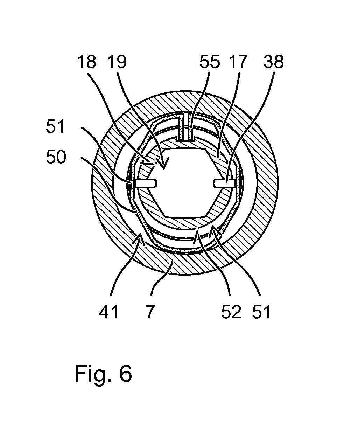

Fig. 6 zeigt einen Federring **50** aus einem gebogenen Metalldraht. Der Federring **50** überlappt in der dargestellten Verriegelungsstellung sowohl mit der Vertiefung **51** in dem Grundkörper **17** als auch der Ringnut **41** in der Betätigungshülse **7.** Die Vertiefung **51** ist hier beispielhaft ringförmig geschlossen ausgebildet. Der Nutboden **52** ist hierbei zylindrisch. Der Federring **50** hat zwei eingewölbte, gegenüberliegende Abschnitte **51,** welche in die Vertiefung **51** eintauchen. Die anderen Abschnitte des Federrings **50** liegen außerhalb der Vertiefung **51.** Eine Verdrehsicherung **55** sorgt dafür, dass die eingewölbten Abschnitte **51** an den Auswurfstiften **38** anliegen. Wird das Werkzeug **3** eingesetzt, drücken die Auswurfstifte **38** die eingewölbten Abschnitte **51** aus der Vertiefung **51** in die Ringnut **41.** Die Betätigungshülse **7** kann nun durch die Feder **25** längs dem Grundkörper **17** bewegt werden.

Die Kugeln **6** und die Auswurfstifte **38** können wie in den Fig. 2 dargestellt in einer Ebene angeordnet sein. Vorzugsweise sind Auswurfstifte **38** gegenüber den Kugeln **6** um 90 Grad um die Arbeitsachse **9** gedreht angeordnet (vgl. Fig. 6). Der Auswurfstift **38** tritt an einer Kante des Aufnahmeraums **19** in diesen ein.

## Patentansprüche

1. Werkzeughalter (2) mit:
einem rohrförmigen Grundkörper (17), der einen zu einer Arbeitsachse (9) koaxialen prismatischen Aufnahmeraum (19) zum Aufnehmen eines Werkzeugs (3) und einen ersten radialen Durchstich (21) aufweist,
einem Verriegelungskörper (6), der in dem ersten radialen Durchstich in radialer Richtung (28) zwischen einer teilweise in den Aufnahmeraum (19) ragenden und einer aus dem Aufnahmeraum (19) ausgerückten Stellung beweglich geführt ist,
einer Betätigungshülse (7), die eine Sperrfläche (26) und eine Tasche (29) aufweist und auf dem Grundkörper (17) längs der Arbeitsachse (9) zwischen einer Verriegelungsstellung zum Verriegeln des Werkzeugs (3) in dem Aufnahmeraum (19) und einer Entnahmestellung zum Entnehmen des Werkzeugs (3) aus dem Aufnahmeraum (19) beweglich ist, wobei in der Verriegelungsstellung die Sperrfläche (26) mit dem ersten radialen Durchstich (21) überlappt und der Verriegelungskörper (6) durch die Sperrfläche (26) in der in den Aufnahmeraum (19) ragenden Stellung gehemmt ist und wobei in der Entnahmestellung die Tasche (29) mit dem ersten radialen Durchstich (21) überlappt und der Verriegelungskörper (6) in die aus dem Aufnahmeraum (19) ausgerückten Stellung beweglich ist,
einer Feder (25), die die Betätigungshülse (7) in Richtung von der Entnahmestellung in die Verriegelungsstellung vorspannt,
**dadurch gekennzeichnet, dass**
der Grundkörper (17) eine Vertiefung (32) in der Außenseite (22) und einen von der Vertiefung (32) ausgehenden zweiten radialen Durchstich (37) aufweist,
die Betätigungshülse (7) ein radial vorgespanntes Rastelement (40) aufweist, das in der Entnahmestellung in die Vertiefung (32) eingreift, und
in dem zweiten radialen Durchstich (37) ein Auswurfkörper (38) geführt ist, der in der Entnahmestellung von dem Rastelement (40) in eine teilweise in den Aufnahmeraum (19) ragende Stellung geschoben ist und in einer aus dem Aufnahmeraum (19) ausgerückten Stellung das Rastelement (40) aus der Vertiefung (32) verdrängt.

2. Werkzeughalter (2) nach Anspruch 1, **dadurch gekennzeichnet, dass** ein axialer Abstand des Verriegelungskörpers (6) zu dem Auswurfkörper (38) gleich einem axialen Abstand der Tasche (29) zu dem Rastelement (40) ist.

3. Werkzeughalter (2) nach Anspruch 1 oder 2, **dadurch gekennzeichnet, dass** die Vertiefung (32) eine in Umfangsrichtung (35) verlaufende Nut (32) ist.

4. Werkzeughalter (2) nach Anspruch 3, **dadurch gekennzeichnet, dass** die Nut (32) einen Winkel von weniger als 90 Grad um die Arbeitsachse (9) umspannt.

5. Werkzeughalter (2) nach Anspruch 3 oder 4, **dadurch gekennzeichnet, dass** der zweite radiale Durchstich (37) mittig in der Nut (32) angeordnet ist.

6. Werkzeughalter (2) nach einem der vorhergehenden Ansprüche, **dadurch gekennzeichnet, dass** das Rastelement (40) ein metallischer Federring (40) ist.

7. Werkzeughalter (2) nach Anspruch 6, **dadurch gekennzeichnet, dass** der Federring (40) in eine zu der dem Grundkörper (17) offene Nut (41) der Betätigungshülse (7) eingesetzt ist.
